# EUROPÄISCHE PATENTSCHRIFT

(11) **EP 0 918 302 B1**
(45) Veröffentlichungstag und Bekanntmachung des Hinweises auf die Patenterteilung: **10.07.2002**
(21) Anmeldenummer: 98122061.9
(22) Anmeldetag: 20.11.1998
(51) Int. Cl.: G06T 7/00, G06F 7/02

(54) **Kohärenzdetektor**
Coherence detector
Détecteur de cohérence

(30) Priorität: 24.11.1997 DE 19752047; 11.11.1998 DE 19851993
(43) Veröffentlichungstag der Anmeldung: 26.05.1999
(73) Patentinhaber: Weiglhofer, Gerhard, 86947 Schwabhausen/Weil (DE); Pauker, Fritz, 86316 Friedberg (DE); Henkel, Rolf Dr., 28213 Bremen (DE)
(72) Erfinder: Pauker, Fritz, 86316 Friedberg (DE); Henkel, Rolf Dr., 28213 Bremen (DE)
(74) Vertreter: Leson, Thomas Johannes Alois, Dipl.-Ing.

(56) Entgegenhaltungen:
- EP-A- 0 725 357
- WO-A-88/02518
- WO-A-91/20054
- DE-A- 19 735 414
- US-A- 5 515 448
- HENKEL R D: "Fast stereovision by coherence detection" COMPUTER ANALYSIS OF IMAGES AND PATTERNS. 7TH INTERNAT. CONF., CAIP '97 PROC., KIEL, GERMANY, 10-12 SEPT. 1997, Seiten 297-304, XP002094472 ISBN 3-540-63460-6, 1997, Berlin, Germany, Springer-Verlag

## Beschreibung

Die vorliegende Erfindung betrifft einem Kohärenzdetektor zur Verwendung in einer Bildverarbeitungsvorrichtung, insbesondere in einer Vorrichtung zur stereoskopischen Bildverarbeitung.

Aus Henkel R D : "Fast stereovision by coherence detection", 7^{th} Intern. Conf. Computer Analysis of Images and Patterns, CAIP 97, pp. 297-304, 1997, Springer Verlay, ISBN 3-540-63460-6 ist bekannt wie ein repräsentativer Disparitätswert mittels Kohärenzdetektion basierend auf einer Menge von potentiellen Kandidaten ermittelt wird, indem nahe beeinander liegende Eingangssignalwerte ( dᵢ ≈ dⱼ) ausgewählt werden und anschließend ein Mittelwert der ausgewählten Signalwerte ausgegeben wird (d ≈ < dᵢ > i ε C ).

Die optische Erfassung der dreidimensionalen Umgebung gewinnt seit geraumer Zeit zunehmend an Bedeutung. Insbesondere bei automatisierten Fertigungsabläufen und den dabei eingesetzten Robotern müssen neben zweidimensionalen Koordinaten auch Tiefeninformationen hinsichtlich eines (zu bearbeitenden) Objektes zur Verfügung stehen, um beispielsweise einen Roboter entsprechend steuern zu können.

Im Rahmen der "Ident Vision" Messe 1996 in Stuttgart (DE) wurde zum Beispiel ein Ganzkörperscanner vorgestellt, der mittels einer Vielzahl von Lasern und Kameras die räumliche Kontur eines Objekts erfassen kann. Jedoch ist dieses System für Echtzeit-Anwendungen ungeeignet.

Bislang bekannte Realisierungen zur Ermittlung von Tiefeninformationen kann man in verschiedene Gruppen unterteilen, die auf jeweils verschiedenen Verfahren beruhen.

Triangulationsverfahren verwenden eine oder mehrere Linien, die entweder von einem Laser oder einer Projektionseinheit auf das betreffende Objekt abgebildet werden. Mit einer oder mehreren Kameras wird das Objekt anschließend unter einem von der Projektionsrichtung geringfügig abweichenden, anderen Blickwinkel aufgenommen. Beruhend auf den vorbekannten geometrischen Verhältnissen erfolgt dann mittels trigonometrischer Berechnungen die Ermittlung der dreidimensionalen Struktur des Objektes.

Nachteilig bei diesen Verfahren ist jedoch, daß unter Umständen für jede projizierte Linie ein Bild auszuwerten ist, was äußerst zeitaufwendig ist, so daß ein derartiges System nicht echtzeittauglich ist.

Darüber hinaus ist es insbesondere nachteilig, daß das jeweilige Meßobjekt zu beleuchten ist. Dies stellt zwar unter Laborbedingungen kein Problem dar, wird aber in der Praxis fast unmöglich, wenn in Situationen wie im Straßenverkehr oder unter bei Teleskopen oder Mikroskopen vorliegenden erschwerten realen Situationen Messungen durchzuführen sind. Ferner sind bei als Linienlichtprojektoren verwendeten Lasern spezielle Unfallverhütungsvorschriften zu beachten, damit bei derartigen Meßaufbauten keine Gefahr für das menschliche Auge besteht.

Bei einem speziellen Triangulationsverfahren wird ein Farbfächer auf das betreffende Objekt projiziert. Die von einer Kamera aufgenommenen Farbwerte können dann eindeutig einem Objektpunkt zugeordnet werden, wobei die Verschiebung einzelner Farbpunkte wiederum als Tiefeninformation auswertbar ist. Obwohl dieses Verfahren in Echtzeit arbeitet, bringt dieses Verfahren die einschränkende Forderung mit sich, daß das Objekt und der Hintergrund weiß sein müssen, so daß das Verfahren nicht universell einsetzbar ist.

Dagegen werten Laufzeitverfahren die Laufzeit von Licht, Mikrowellen oder eines Schallsignals als einem Meßsignal aus, um Rückschlüsse auf die räumliche Umgebung und die Tiefeninformation zu ziehen. Dabei wird jeweils eine Raumrichtung angepeilt und eine Abstandsmessung vorgenommen. Beispielsweise beruhen das Prinzip eines Radargerätes oder eines medizinischen Ultraschallgerätes auf derartigen Laufzeitverfahren. Laufzeitverfahren erfordern jedoch eine aufwendige Signalverarbeitung und sind zudem von den Eigenschaften des umgebenden Mediums abhängig, das die Ausbreitungseigenschaften des betreffenden Meßsignals beeinflußt.

Weiterhin kommen Schärfentiefeverfahren zum Einsatz, die jedoch nur dann angewendet werden können, wenn die Objektgröße und die Öffnung eines Objektivs in einem bestimmten Verhältnis zueinander stehen, wie beispielsweise in der Mikroskopie. Dabei wird durch das optische System nur der schmale Bereich der Fokalebene scharf auf einen Bildsensor abgebildet. Die Bereiche davor und dahinter sind mehr oder weniger unfokussiert. Die in der Fokalebene enthaltene Bildinformation kann mit herkömmlichen Bildverarbeitungsverfahren ausgewertet werden. Eine entsprechende Auswertung liefert dann eine Höhenlinie des Objekts. Durch mehrfaches Verschieben der Fokalebene und anschließender Auswertung kann dann eine Höhenlinienkarte des Objekts erstellt werden, was jedoch entsprechend aufwendig ist.

Ein weiterer Ansatz, der erst seit wenigen Jahren verfolgt wird, beruht in der Auswertung stereoskopischer Bilder zum Gewinnen von Tiefeninformationen, ähnlich dem räumlichen Sehen beim Menschen, dessen Nachbildung durch derartige Verfahren angestrebt ist.

Das Phänomen des räumlichen Sehens, das nachfolgend kurz in Bezug auf den Menschen allgemein erläutert ist, beruht auf der Wahrnehmung der sichtbaren Umwelt mittels der beiden menschlichen Augen, wobei aufgrund des Augenabstandes die beiden wahrgenommenen Bilder (rechtes Auge bzw. Bild, linkes Auge bzw. Bild) unter leicht unterschiedlichen Blickwinkeln wahrgenommen werden. Da die Sehachsen der Augen etwas konvergieren, treffen sich ihre Sehachsen an einem Punkt der betrachteten Umwelt, wobei von einer Fixierung dieses Punktes durch die Augen gesprochen wird. Das Bild dieses Punktes fällt jeweils auf eine Sehgrube der Netzhaut. Jeder benachbarte Punkt im Gesichtsfeld wird dann auf eine Stelle der Netzhaut projiziert, die etwas vom Zentrum des schärfsten Sehens entfernt liegt. Im allgemeinen ist dieser Abstand in beiden Augen unterschiedlich, wobei der Abstand als Funktion der räumlichen Tiefe des betrachteten Punktes im Gesichtsfeld relativ zum Fixationspunkt variiert. Diese Abstandsabweichungen werden als binokulare Disparitäten bezeichnet, die nachfolgend kurz als "Disparitäten" bezeichnet sind.

Beim Stereosehen besteht das eigentliche Problem, neben der Auswertung der jeweils gegebenen trigonometrischen Gegebenheiten darin herauszufinden, welcher Bildpunkt der realen Welt bzw. des gesehenen Objekts, der im ersten der stereoskopischen Bilder auftritt, welchem Bildpunkt im zweiten der stereoskopischen Bilder entspricht. Anders ausgedrückt, gilt es in Bezug auf das menschliche Auge herauszufinden, welcher Bildpunkt auf der linken Netzhaut welchem Bildpunkt auf der rechten Netzhaut entspricht.

Für das räumliche Sehen bzw. die 3D-Stereowahrnehmung ist es dann erforderlich, aus den Disparitäten auf die dreidimensionale Struktur des wahrgenommenen Bildes zurück zuschließen. Anders ausgedrückt, aus ermittelten Disparitäten kann auf die in dem wahrgenommenen Bild enthaltenen Tiefeninformationen geschlossen werden.

Bislang verfügbare Stereoverfahren sind jedoch auf leistungsfähige Arbeitsplatzrechner (PC's bzw. sogenannte "Workstations") angewiesen, wobei zur Ermittlung der gewünschten Tiefeninformationen aus einem einzigen Stereobildpaar, beispielsweise unter Verwendung eines handelsüblichen Arbeitsplatzrechners (mit einer Taktfrequenz von etwa 90 MHz), eine Zeit im Bereich von etwa 3 bis 5 Minuten erforderlich ist.

Versucht man jedoch, derartige Verfahren in spezielle Rechenwerke auszulagern, übersteigt der Entwicklungs- und Hardwareaufwand sehr schnell wirtschaftlich vertretbare Grenzen. Die Markteinführung derartiger Systeme scheiterte bislang also entweder an einer zu geringen Verarbeitungsgeschwindigkeit oder einem zu hohen Systempreis.

Stereoverfahren sind bestrebt, einander entsprechende Bildpunkte zwischen einem ersten (linken) und zweiten (rechten) Stereobild zu finden, wobei dann aus der relativen Verschiebung solcher Bildpunkte bei bekannter Kameraposition die Entfernung der Punkte berechnet werden kann.

Unter den vorstehend angesprochenen herkömmlichen rechnerimplementierbaren Stereoverfahren kann man im wesentlichen unterscheiden zwischen sogenannten merkmalsbasierten Stereoverfahren, intensitätsbasierten Stereoverfahren und phasenbasierten Stereoverfahren.

Bei merkmalsbasierten Stereoverfahren werden vor der Korrespondenz-Suche bestimmte Merkmale (z.B. Kanten oder Intensitätsmaxima) aus den Bilddaten extrahiert, die für stabiler als die rohen Bildintensitäten gehalten werden. Derartige Verfahren sind stabil, falls nur wenige stabile Merkmale (etwa Objektkanten) extrahiert werden. Sie sind auch schnell, da Bilder nur an den Orten weiterverarbeitet werden müssen, an denen Merkmale erfaßt wurden. Dies führt zu einer merklichen Datenreduktion.

Jedoch können dadurch Disparitäten nur an den Stellen berechnet werden, an denen die gewählten Merkmale erfaßt wurden. An allen weiteren Stellen des Bildes muß interpoliert werden, was zusätzlich zeitaufwendige Rechenvorgänge notwendig macht. Je dichter die Merkmale liegen, desto schwieriger wird es, diese einander zuzuordnen. Die endgültige Zuordnung kann nur anhand komplizierter einzusetzender Verfahren getroffen werden, was zu einer verminderten Verarbeitungsgeschwindigkeit führt.

Die Druckschrift WO 94/18797 A1 beschreibt beispielsweise ein derartiges merkmalsbasiertes verfahren sowie eine entsprechende Vorrichtung.

Intensitätsbasierte Stereoverfahren arbeiten direkt mit den seitens der Stereokameras bzw. der Bildaufnehmer gelieferten Bildhelligkeiten. Daher sind zur Zuordnung einander entsprechender Helligkeiten sehr stabile Algorithmen einzusetzen, die entsprechend viel Rechenzeit erfordern. Unter den intensitätsbasierten Verfahren kann weiter unterschieden werden zwischen korrelationsbasierten Verfahren und Verfahren mittels dynamischer Programmierung.

Erstere sind bestrebt, einen kleinen Bildbereich des linken Bildes in dem rechten Bild wiederzufinden. Dazu werden üblicherweise Verfahren zur Maximierung der Korrelation oder Minimierung der Differenz eingesetzt. Falls die Bildausschnitte groß genug gewählt sind, erzielt man mit diesen Verfahren stabile und dichte Disparitätskarten, wobei eine Echtzeitverarbeitung unter Einsatz spezieller aufwendiger Hardware denkbar ist. Die rohen Disparitätskarten enthalten typischerweise jedoch nur Verschiebungen im Bereich der Genauigkeit eines Bildelements (Pixel), so daß die Auflösung begrenzt ist. Nur durch Einsatz von Interpolationsverfahren oder aber iterativen Verfahren kann die Genauigkeit der Disparitäten jedoch auf subpixelgenaue Disparitäten verbessert werden.

Derartige korrelationsbasierte Verfahren sind zum Beispiel in der Druckschrift DE 34 25 946 A1 sowie dem Artikel "A stereovision system for a planetary rover: calibration, correlation, registration, and fusion" von Z. Zhang, in: Machine Vision and Applications, Nr. 10, 1997, S.27-34 beschrieben.

Bei Verfahren mittels dynamischer Programmierung wird versucht, lokal die Differenz zu minimieren, wobei diese lokale Minimierung dann anhand geeigneter Verfahren auf das gesamte Bild ausgedehnt wird. Typischerweise berechnen auch diese Verfahren Disparitäten nur auf ein Bildelement genau, was für zahlreiche Anwendungen jedoch zu ungenau ist.

Zusammenfassend ist festzustellen, daß intensitätsbasierte Verfahren zwar eine dichte Disparitätskarte (einen Disparitätswert für fast jeden Bildpunkt) liefern, die Minimierung des Fehlermaßes wie bei dem Verfahren der Minimierung der Differenz jedoch zeitaufwendig ist und daher nicht für Echtzeitanwendungen geeignet ist. Die Reduzierung der erforderlichen Rechenzeit kann durch Einsatz hierarchischer Verfahren reduziert werden, dies jedoch nur durch Einsatz komplizierter und nicht parallelisierbarer algorithmischer Strukturen, für die eine Hardwarelösung zumindest äußerst aufwendig und somit kostenintensiv wird.

Des weiteren sind phasenbasierte Stereoverfahren Gegenstand aktueller Untersuchungen. Diese Verfahren extrahieren aus den rohen Bilddaten eine lokale Fourier-Phase (meist durch Filterung mittels Gabor-Funktionen), und versuchen dann, entweder, diese Fourier-Phasenbilder (für das rechte bzw. linke Bild) (so z. B. beschrieben von Weng) in Übereinstimmung zu bringen, oder über die Anwendung des Fourier'schen-Verschiebungstheorems die lokale Verschiebung zu berechenen (so z. B. beschrieben von Sanger, Fleet & Jepson). Die Extraktion der lokalen Fourier-Phase entspricht dabei effektiv einem lokalen Kontrast-Ausgleich, wodurch viele durch Helligkeitsschwankungen verursachte Fehler anderer Stereoverfahren reduziert werden. Diese phasenbasierten Stereoverfahren arbeiten subpixel-genau und sind auch für Echtzeitanwendungen implementierbar. Jedoch müssen zur Erzeugung dichter Disparitätskarten hierarchische Verfahren eingesetzt werden, die zur Fehlervermeidung meist spezielle Ausnahmesituationen abfangen müssen (vgl. Fleet). Dies macht die verwendeten Algorithmen kompliziert und eine Hardwarerealisierung aufwendig und kostenintensiv.

Es ist folglich Aufgabe der vorliegenden Erfindung, einen Kohärenzdetektor für eine Bildverarbeitungsvorrichtung anzugeben, mit der stereoskopische Bilder in Echtzeit verarbeitet werden können, und die mit einfachen Mitteln und geringem Aufwand zu realisieren ist.

Erfindungsgemäß wird diese Aufgabe wie in Anspruch 1 definiert gelöst, Ferner wird die Aufgabe gelöst durch eine Bildverarbeitungsvorrichtung mit Verschiebe-Einrichtungen zur gegenseitigen Verschiebung von diesen jeweils zugeführten Bilddaten eines ersten Bildes und eines zu diesem unter einem anderen Aufnahmewinkel aufgenommenen zweiten Bildes, wobei die Bilddaten an den Verschiebe-Einrichtungen jeweils parallel abgegriffen werden und paarweise einer nachfolgenden Disparitäts-Detektionseinrichtung zugeführt werden; wobei die Disparitäts-Detektionseinrichtung für jedes der zugeführten Bilddatenpaare mittels eines jeweiligen Disparitäts-Elementes einen räumliche Tiefeninformationen für das jeweilige Bilddatenpaar darstellenden Disparitätswert ermittelt, und die ermittelten Disparitätswerte einer Kohärenz-Detektionseinrichtung zuführt, wobei der ausgegebene Disparitätswert auf jede Verschiebung der Bilddaten hin ermittelt wird und die zugehörige räumliche Tiefeninformation darstellt.

Durch diesen erfindungsgemäßen Aufbau können die zugeführten Bildsignale mit der Geschwindigkeit verarbeitet werden, wie sie von Bildaufnehmern geliefert werden. Somit ist die Bilddatenverarbeitung zur Gewinnung von Tiefeninformationen mit geringem Aufwand und in Echtzeit möglich.

Diese hohe Verarbeitungsgeschwindigkeit (Echtzeit) des Systems ist ein wesentlicher Vorteil gegenüber dem Stand der Technik. Mit einer Bildrate von beispielsweise 25 Bildern pro Sekunde, die dem System seitens der Bildaufnehmer zugeführt werden und von diesem in Echtzeit verarbeitet werden, ist das System bzw. das mit diesem implementierte Verfahren den aus dem Stand der Technik bekannten Anordnungen bzw. Verfahren zumindest um einen Geschwindigkeitsfaktor von 100 überlegen.

Weiterhin ist das zu messende Volumen des Meßobjekts gegenüber bekannten Systemen nicht mehr begrenzt. Insbesondere ist der Meßbereich der erfindungsgemäßen Bildverarbeitungsvorrichtung nur durch die Begrenzung der verwendeten abbildenden Optik bestimmt, und alle optischen Vorsatzgeräte wie Mikroskope, Tele- oder Weitwinkelobjektive können in Verbindung mit den Bildaufnehmern eingesetzt werden, sofern sie an diese angepaßt sind. Insbesondere ist es mit dem erfindungsgemäßen System möglich, ein Meßobjekt ohne Markierungshilfen auszuwerten, die bei Systemen gemäß dem Stand der Technik häufig erforderlich sind.

Durch die Möglichkeit, ein Meßobjekt ohne Markierungshilfen auszuwerten entfällt weiterhin die Notwendigkeit eine dafür notwendige Projektionseinheit vorzusehen. Folglich wird die erfindungsgemäße Vorrichtung kompakter und leichter, wobei sich die Handhabung erleichtert und sich vielseitigere Einsatzmöglichkeiten ergeben.

Zudem entfällt bei der erfindungsgemäßen Vorrichtung auch eine Vorbehandlung des Meßobjekts selbst, beispielsweise ein Abdecken des Meßobjekts mit hellem Puder zur Beseitigung von Spiegelungen und Glanzlichtern auf der Objektoberfläche vor der Messung und Beseitigung des Puders nach erfolgter Messung. Durch die Einsparung derartiger Arbeitsgänge arbeitet die erfindungsgemäße Vorrichtung zeit- und kostengünstiger.

Zudem ist es mit der erfindungsgemäßen Vorrichtung vorteilhafterweise möglich, beliebige Bildsignalquellen anzuschließen. Das heißt, die erfindungsgemäße Vorrichtung ist nicht auf den Bereich sichtbaren Lichts beschränkt, sondern die Auswertung kann beispielsweise auch für Bildsignale im Infrarotbereich erfolgen.

Mit den erfindungsgemäßen Kohärenzdetektoren ist es insbesondere möglich, aus einer Vielzahl von Eingangssignalen diejenigen Signale in Echtzeit zu ermitteln, deren Werte einander am ähnlichsten sind, und diesen "ähnlichsten" Wert dann weiter zu verarbeiten.

Vorteilhafte Weiterbildungen der Erfindung sind in den Unteransprüchen angegeben.

Die vorliegende Erfindung ist nachstehend anhand von Ausführungsbeispielen mit Bezug auf die beigefügte Zeichnung näher beschrieben. Dabei zeigen:
Fig. 1A ein allgemeines Blockschaltbild des erfindungsgemäßen Systems;
Fig. 1B eine schematische Darstellung einer stereoskopischen Bilderfassung zur Erläuterung und Begriffsdefinition;
Fig. 2 ein Blockschaltbild, das Bildsignal-Verschiebeeinrichtungen und Disparitätsbestimmungseinrichtungen betreffende Einzelheiten zeigt;
Fig. 3A ein Funktionsschältbild eines einzelnen gradientenbasierten bzw. differentiellen Disparitätselements;
Fig. 3B ein Blockschaltbild zur Hardwarerealisierung des gemäß Fig. 3A funktional beschriebenen einzelnen Disparitätselements.
Fig. 4A ein Blockschaltbild eines ersten Ausführungsbeispiels eines Kohärenzdetektors;
Fig. 4B eine schematische Darstellung einer Ausführungsvariante eines Kohärenzdetektors;
Fig. 5 ein Diagramm, das für alle Bildelemente einer Bildzeile die von verschiedenen Disparitätselementen ermittelten Disparitäten darstellt, aus denen dann mittels eines Kohärenzdetektors in Echtzeit die tatsächliche bzw. wahre Disparität im Verlauf der Bildzeile bestimmt wird.
Fig. 6 ein Beispiel zweier als Bildsignalstrom zugeführter Bilder eines ersten und zweiten (bzw. linken und rechten) Bildaufnehmers, sowie eine Darstellung der mit der erfindungsgemäßen Vorrichtung ermittelten Tiefeninformation in Form einer sogenannten Disparitätskarte.

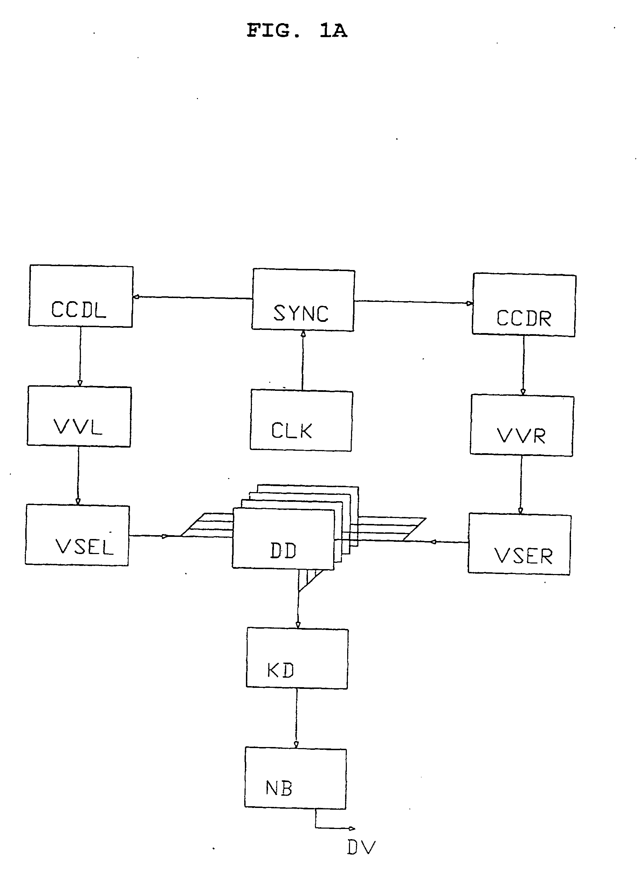

Fig. 1A stellt die erfindungsgemäße stereoskopische Bildverarbeitungsvorrichtung zur Erfassung dreidimensionaler Objekte in Echtzeit schematisch als Blockschaltbild dar.

Die Bildverarbeitungsvorrichtung weist einen Sensorkopf auf, der zwei Bildaufnehmer umfaßt, einen Bildaufnehmer CCDL für das (erste) linke Bild und einen Bildaufnehmer CCDR für das (zweite) rechte Bild. Eines dieser Bilder wird dabei für die nachfolgende Verarbeitung als Referenzbild definiert. Das heißt, daß ermittelte Disparitätsergebnisse zur Erstellung einer Disparitätskarte den Bilddaten des Referenzbildes zugeordnet werden.

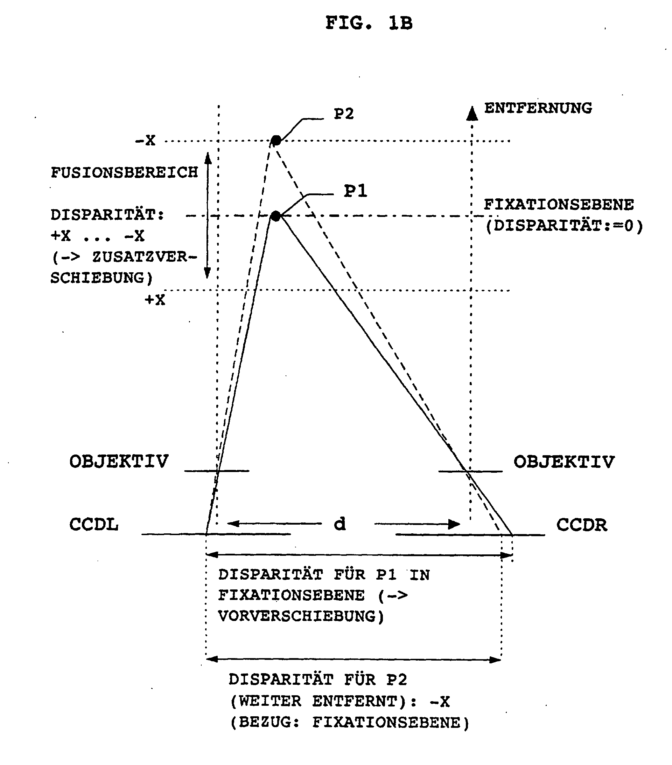

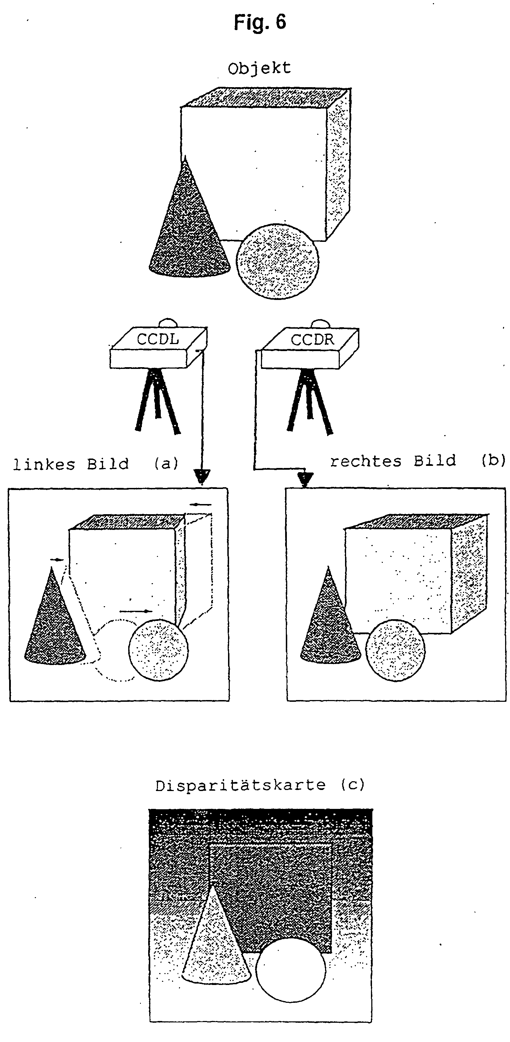

Bei den Bildaufnehmern kann es sich beispielsweise um ein Kamerapaar mit CCD-Bildaufnehmern handeln, die in einem vorbestimmten bekannten Abstand d voneinander angeordnet sind und daher leicht unterschiedliche Bilder des selben Objektes aufnehmen (vgl. Fig. 1B und Fig. 6). Insbesondere können die Bildaufnehmer Bewegtbilder aufnehmen und diese der Vorrichtung zur nachfolgenden Echtzeitverarbeitung zuführen. Mittels einer Bildaufnehmer-Synchronisationseinrichtung SYNC werden die Aufnahmen der Bildaufnehmereinrichtungen CCDL, CCDR zeitlich synchronisiert, so daß das linke und das rechte Bild synchron zueinander aufgenommen werden.

Je nach Entfernung des Objekts von den Bildaufnehmern bzw. Kameras weisen die aufgenommenen Bildpunkte leichte - als Disparitäten bezeichnete - Verschiebungen auf. Das heißt, daß das selbe Objekt an verschiedenen Stellen im ersten bzw. zweiten Bild erscheint.

Mittels einer nachfolgend als Disparitätsdetektor DD bezeichneten Einrichtung und einer als Disparitäts-Kohärenzdetektor KD bezeichneten Einrichtung (die beide nachfolgend noch ausführlich beschrieben sind) können die tatsächlichen Disparitäten bzw. Verschiebungen ermittelt werden und dann durch trigonometrische Berechnungen unter Berücksichtigung des bekannten Abstandes d zwischen den Bildaufnehmern CCDL, CCDR die räumliche Entfernung des jeweiligen Objekts berechnet werden, somit die gesuchten Tiefeninformationen erhalten werden.

Die so aus zwei Stereo-Bewegtbildern berechnete Tiefeninformation kann quasi verzögerungsfrei in Echtzeit als Videosignal ausgegeben werden und als dritte Dimension (z. B. drittes Bild) als Grauwertbild oder Farbbild dargestellt werden. Dabei ist die Echtzeitverarbeitung des Systems insbesondere durch die serielle Verarbeitung der durch die Bildaufnehmer CCDL, CCDR gelieferten Bilddaten bedingt.

Mit der Bildaufnehmer-Synchronisationseinrichtung SYNC verbunden ist ein Taktgenerator CLK, der Taktsignale zur Steuerung und Synchronisation weiterer Komponenten des Systems erzeugt.

Die aufgenommenen Bildsignale werden von den Bildaufnehmern CCDL, CCDR diesen jeweils zugeordneten Vorverarbeitungseinrichtungen VVL, VVR zugeführt. In diesen Vorverarbeitungseinrichtungen VVL, VVR erfolgt ein Helligkeitsausgleich der beiden Stereobilder vor der nachfolgenden Verarbeitung. Diese Helligkeitsvorverarbeitung ist vorteilhaft, da aufgrund leicht unterschiedlicher Bildaufnahmewinkel der Bildaufnehmer CCDL, CCDR sogenannte Glanzlichter und Reflexionen an (spiegelnden) Oberflächen der aufgenommen Objekte auftreten können, die bei der nachfolgenden Verarbeitung der Bilddaten zur Erfassung der Disparitäten zu Fehlern führen können, so daß die Disparitätswerte instabil werden könnten.

Für den Fall der Verarbeitung von Farbbildern kann im Rahmen der Vorverarbeitung durch die Vorverarbeitungseinrichtungen eine Zerlegung der jeweiligen (ersten und zweiten) Farbilddaten in jeweilige Farbbildkomponenten (z. B. in die Primärfarben Rot, Grün, Blau (RGB) oder aber in die Luminanz- und die beiden Farbdifferenzkomponenten) erfolgen. Zudem ist es auch möglich, die ersten und zweiten Bilddaten unterschiedlichen Vorverarbeitungen zu unterziehen.

Nach erfolgter Vorverarbeitung der Bilddaten seitens der Vorverarbeitungseinrichtungen VVL, VVR werden die Bilddaten des ersten und zweiten (bzw. linken und rechten) Bildes jeweils Einrichtungen VSEL, VSER zur gegenseitigen Verschiebung der linken und rechten Bilddaten in Bezug aufeinander zugeführt. Genauer heißt das, daß jeweils zwei Verschiebeeinrichtungen VSEL, VSER eine Verschiebeeinheit bilden, wobei dabei je ein Verschiebestrom von Bilddaten nach "rechts" und nach "links" pro Verschiebeeinheit vorliegt. Eine Verschiebeeinheit ist dabei je nach Anwendungsfall für jede Art von Bilddaten vorzusehen. Das heißt, im Fall einer Vorverarbeitung durch Zerlegung in die Primärfarben R, G und B können drei Verschiebeeinheiten vorgesehen sein, und zwar je eine für jede Primärfarbe.

Die Disparitäten derart zueinander verschobener Bilddaten werden dann für jeweilige Bilddatenpaare durch den Disparitätsdetektor DD ermittelt und ein jeweiliger Satz erhaltener Disparitätswerte für die Bilddatenpaare wird durch den Disparitäts-Kohärenzdetektor KD ausgewertet.

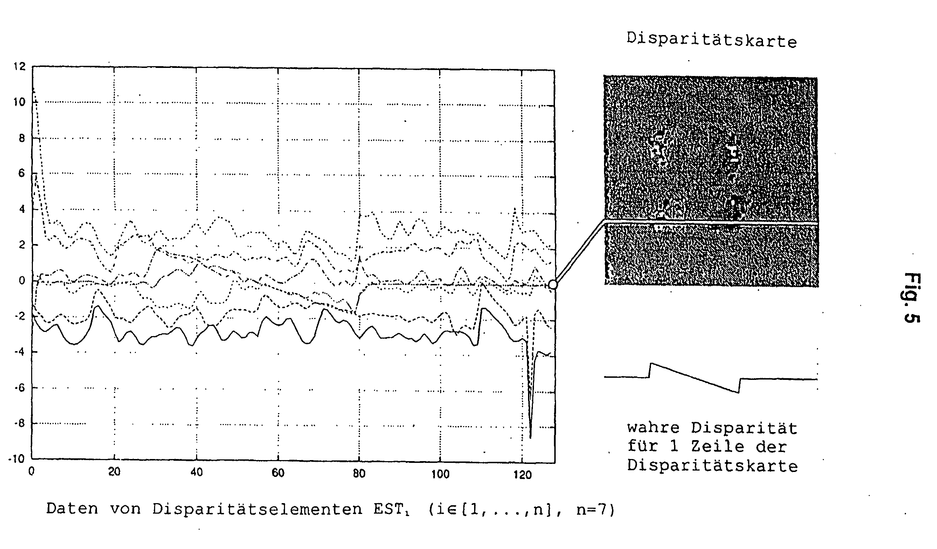

Diese Kohärenzdetektion bezüglich der erhaltenen Disparitäten beruht auf der Auswahl bzw. Ermittlung desjenigen der erhaltenen Disparitätswerte, der annähernd identisch mit zumindest einem weiteren der erhaltenen Disparitätswerte ist. Anders ausgedrückt wird der Disparitätswert als der eigentliche bzw. wahre Disparitätswert ermittelt, der in etwa identisch zu zumindest einem weiteren Disparitätswert (d.h. in einem vorbestimmten Intervall um diesen liegt) oder identisch mit zumindest einem weiteren Disparitätswert ist. Fig. 5 veranschaulicht dieses Prinzipien anhand von Daten von beispielsweise sieben Disparitätselementen eines Disparitätsdetektors.

Die seitens des Disparitäts-Kohärenzdetektors KD derart ermittelten eigentlichen Disparitätswerte werden dann von diesem an eine Einrichtung NB zur Bilddatennachbearbeitung ausgegeben. Diese Einrichtung NB bereitet die Disparitätswerte so auf, daß diese über einen Ausgangsanschluß DV einer wahlweise anzuschließenden Ausgabevorrichtung wie zum Beispiel einer (nicht dargestellten) Anzeigeeinrichtung zugeführt werden können und von dieser als Grauwert- oder Farbbild wiedergegeben werden. Zur besseren Darstellbarkeit der Disparitätswerte erfolgt im Rahmen der Bilddatennachbearbeitung auch eine Beseitigung auftretender Randeffekte sowie eine virtuelle Begrenzung.

In der Figur selbst nicht dargestellt ist eine externe Bedieneinheit zur Konfiguration des Systems, die durch einen Arbeitsplatzrechner mit geeigneter Schnittstelle zu dem System implementiert sein kann.

Fig. 1B zeigt erläuternd schematisch das Prinzip einer stereoskopischen Bilderfassung. Mit CCDL, CCDR sind die in einem Abstand d voneinander angeordneten Bildaufnehmer bezeichnet, auf deren jeweiligem lichtempfindlichen Erfassungsabschnitt ein abzubildendes Objekt bzw. abzubildender Punkt P1, P2 über ein vorgeschaltetes Objektiv abgebildet wird. Der Abstand d ist dabei als der Abstand zwischen den optischen Achsen der Objektive definiert, die als vertikal verlaufende strichpunktierte Linien eingezeichnet sind. Der Punkt P2 ist dabei in Richtung der optischen Achse weiter entfernt als der Punkt P1.

wie der schematischen Darstellung zu entnehmen ist, sind die Abbildungen der Punkte P1, P2 auf den Erfassungsabschnitten der Bildaufnehmer in Abhängigkeit der Entfernung unterschiedlich. Unter der Annahme, daß die Bildaufnehmer jeweils aus einer gewissen Anzahl von Bildelementen bestehen, ist der Punkt P1 beim Bildaufnehmer CCDL an einem Bildelement j abgebildet, während der Punkt P1 beim Bildaufnehmer CCDR an einem Bildelement j+y abgebildet ist. Die Bildelemente j und j+y entsprechen sich somit hinsichtlich ihres Informationsgehalts. Aufgrund dieser Verschiebung (Disparität) y kann aus den vorliegenden trigonometrischen Verhältnissen auf die Entfernung des Punktes P1 geschlossen werden. Die Entfernung des Punktes P1 sei nun als Bezugsentfernung definiert, was als Grundmeßbereich der Vorrichtung angesehen werden kann. Dann liegt der Punkt P1 in einer als Fixationsebene definierten Referenzebene, für die eine (relative) Disparität von Null angenommen sei. Anders ausgedrückt, ist die ermittelte Disparität auf die Fixationsebene bezogen. Durch die geeignete Auswahl einer Vorverschiebung (z.B. y1, oder y2) zwischen den auszuwertenden ersten und zweiten Bilddaten kann somit die Fixationsebene bestimmt und der Grundmeßbereich festgelegt werden. Das heißt, bevor die Bilddaten des ersten und zweiten Bildes den Verschiebe-Einrichtunge VSEL, VSER zugeführt werden, werden sie bereits in Bezug aufeinander um den Vorverschiebungsbetrag (z.B. y2) verschoben.

Die Fixationsebene in einem Intervall von Disparitätswerten [-x ..., 0,..., +x] umgebend liegt der sogenannte Fusionsbereich. Der Fusionsbereich entspricht dabei einem "Schärfentiefebereich". Die (relativen) Disparitätswerte im Fusionsbereich werden aufgrund der seitens der Verschiebe-Einrichtunge VSEL, VSER zusätzlich bedingten Verschiebung der Bilddaten ermittelt. Je größer die zusätzliche Verschiebung ist, die ausgewertet wird, desto größer ist der Fusionsbereich und somit der "Schärfentiefebereich" um die Fixationsebene. Die zusätzlich erreichbare Verschiebung steht dabei sowohl in Zusammenhang mit der Anzahl n von nachstehend beschriebenen Verschiebe-Elementen der Verschiebe-Einrichtungen, als auch der Art deren Ansteuerung.

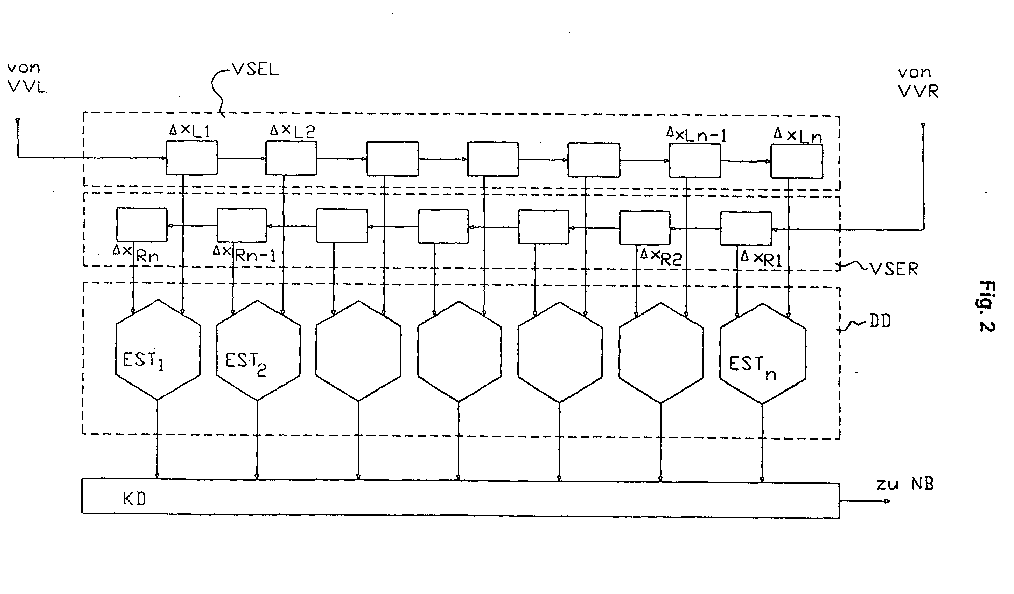

Fig. 2 der Zeichnung zeigt nunmehr Einzelheiten der Bilddaten-Verschiebeeinrichtung VSEL für Bilddaten des (ersten) linken Bildes, der Bilddaten-Verschiebeeinrichtung VSER für Bilddaten des (zweiten) rechten Bildes, die zusammen eine Verschiebeeinheit bilden, und des Disparitätsdetektors DD als Disparitätsbestimmungseinrichtung. Dabei sind die Komponenten gemäß Fig. 2 nicht auf eine bestimmte Implementierung in analoger oder digitaler Technik festgelegt und ihre Beschreibung erfolgt zunächst in allgemeiner Form, unabhängig von der tatsächlichen Realisierungsform.

Die von den jeweiligen Vorverarbeitungseinrichtungen VVL, VVR ausgegebenen Bilddaten werden den Bilddaten-Verschiebeeinrichtungen VSEL, VSER zugeführt. Diese Zufuhr erfolgt, wie vorstehend bereits erwähnt, mit einer Vorverschiebung entsprechend dem gewünschten Grundmeßbereich. Im gezeigten Fall ist dabei zur Vereinfachung der Darstellung nur eine Verschiebeeinheit für eine Art von Bilddaten, beispielsweise für eine der Primärfarben R, G, B dargestellt.

Dabei werden die jeweiligen Bilddaten diesen Verschiebeeinrichtungen der Verschiebeeinheit jeweils seriell und synchron zueinander zugeführt. Jede der Verschiebeeinrichtungen VSEL, VSER besteht aus einer Vielzahl von Verschiebeelementen ΔX_{L1} bis ΔX_{Ln} bzw. ΔX_{R1} bis ΔX_{Rn}. Diese Elemente bewirken jeweils eine zusätzliche Verschiebung der zugeführten Bildelemente um eine kleine Strecke in x-Richtung, d.h. in Richtung der Hauptabtastrichtung bei zeilenweise abtastenden Bildaufnehmern. (Fig. 2 zeigt einen Fall für n=7.)

Beginnend mit dem jeweils ersten (jedoch unter Berücksichtigung der Vorverschiebung) Bildelement der seriellen Bilddatenströme des linken bzw. rechten Bildes (z.B. Bildelement der oberen linken Ecke des jeweiligen Bildes) werden die Bildelemente (Pixel) gegeneinander verschoben. Die Auswertung der Bildelemente hinsichtlich der vorhandenen Disparität erfolgt dann jeweils paarweise. Genauer erfolgt eine paarweise Auswertung hinsichtlich der Disparität beruhend auf den verschobenen Bilddaten für Paare (ΔX_{L1}, ΔX_{Rn}), (ΔX_{L2,} ΔX_{Rn-1}), ..., (ΔX_{Ln-1,} ΔX_{R2}), (ΔX_{Ln,} ΔX_{R1}). Der Betrag ΔX der Verschiebung kann auf einen Wert eingestellt werden, der der Länge eines Bildelements entspricht. Falls eine höhere Zuverlässigkeit ("Stabilität" des implementierten Verfahrens), mithin Genauigkeit gewünscht ist, kann diese Verschiebung jedoch auch auf einen Wert eingestellt werden, der kleiner als die Länge eines Bildelements ist, beispielsweise auf die halbe Länge eines Bildelements (Pixels). Dies bedingt jedoch eine höhere Anzahl von nachfolgend beschriebenen Elementen des Disparitäts-Detektors, wenn der Fusionsbereich konstant bleiben soll.

Im Fall von als Analogschaltung realisierten Verschiebeeinrichtungen VSEL, VSER bestehen diese jeweils aus einer Kette bzw. Kaskade von Laufzeitgliedern (Verzögerungsgliedern) mit entsprechenden Signalabgriffen. Der Verschiebungsbetrag in x-Richtung entspricht dann der Laufzeit und kann bildelementweise oder in Bruchteilen von Bildelementen gewählt sein.

Im Fall von als Digitalschaltung realisierten Verschiebeeinrichtungen VSEL, VSER besteht die jeweilige Einheit aus in Reihe geschalteten Schieberegistern, denen ein entsprechendes Taktsignal von dem Taktgenerator CLK (ggfs. über einen zwischengeschalteten (nicht dargestellten) Frequenzteiler) zuzuführen ist. Dann ist es jedoch zuvor erforderlich, die analogen Bilddaten mittels eines Analog/Digital-Wandlers in digitale Bilddaten umzuwandeln. Ein derartiger Analog/Digital-Wandler kann vor oder nach der jeweiligen Vorverarbeitungseinrichtung VVL, VVR im Signalverlauf vorgesehen sein, je nachdem, ob die Vorverarbeitung noch analog oder schon digital erfolgt.

Im Fall der digitalen Schieberegister erfolgt die Ansteuerung der Verschiebeelemente ΔX_{Li}, ΔX_{Ri} der jeweiligen Verschiebeeinrichtung zur bildelementweisen Verschiebung jeweils entsprechend dem Takt, mit dem die digitalen Bilddaten zugeführt werden. Ist Subpixel-Genauigkeit erforderlich, so sind die bereits digitalisierten Daten einem speziellen Filter zuzuführen. Zum Beispiel wird eine einem halben Bildelement entsprechende Verschiebung erreicht, indem man zwei aufeinanderfolgende Bildelemente mittels eines entsprechenden Filters einer Mittelwertbildung unterzieht und den erhaltenen Wert als Signalwert des Bildelements an der um ein halbes Bildelement verschobenen Position annimmt. Eine derartige Filterung entspricht dann im wesentlichen einer Ditherung benachbarter Bildelemente.

Die Ansteuerung kann dabei für beide Verschiebeeinrichtungen VSEL, VSER gleichzeitig erfolgen, oder aber auch gegenphasig erfolgen, je nachdem, welcher zusätzliche Verschiebungsbereich ("Schärfentiefebereich") gewünscht ist. Auf das dargestellte Beispiel von Fig. 2 mit n=7 bezogen heißt das, daß bei gleichzeitiger Ansteuerung jeweils Bilddatenpaare vergleichend ausgewertet werden, die um +/-6, +/-4, +/-2, und 0 gegeneinander verschoben sind. Bei gegenphasiger Ansteuerung sind im gleichen Beispiel Verschiebungen um -7, -5, -3, ..., +5 als auch -6, -4-, -2, ...., +6 möglich. Aufgrund der größeren zusätzlichen Verschiebung ist dabei ein erweiterter Schärfentiefebereich zu erwarten. Obwohl Fig. 2 ein Beipsiel für n=7 darstellt, ist die Erfindung nicht auf ungerade Werte für n beschränkt, sondern es kann auch eine geradzahlige Anzahl von Verschiebeelementen eingesetzt werden.

Die vorstehend genannten Bilddatenpaare (ΔX_{L1,} ΔX_{Rn}), (ΔX_{L2,} ΔX_{Rn-1}), ..., (ΔX_{Ln-1,} ΔX_{R2}), (ΔX_{Ln}, ΔX_{R1}) werden dann jeweils einem von n Elementen EST₁, ..., ESTₙ des Disparitätsdetektors DD zur Auswertung zugeführt, um die entsprechende Disparität für das jeweilige Bilddatenpaar zu ermitteln. Es ist zu beachten, daß aufgrund der vereinfachten Darstellung gemäß Fig. 2 nur ein Disparitätsdetektor DD dargestellt ist. Sind jedoch mehrere Verschiebeeinheiten (z.B. jeweils für R-, G-, B- Bilddaten vorhanden), so ist jeder der Verschiebeeinheiten ein entsprechender Disparitätsdetektor zuzuordnen.

Für jeweilige Diparitäts-Elemente ESTᵢ eines Disparitätsdetektors DD sind verschiedene Arten denkbar. Beispielsweise kann die Auswertung gradientenbasiert, tensorbasiert, energiebasiert oder aber gemäß dem Reichard'schen Beugungsdetektions-Modell erfolgen. Diese Auswerteprinzipien sind in der Fachliteratur hinreichend beschrieben (so z. B. bei Barron, Fleet & Jepson, Adelson & Berger D.J. Fleet and A. D. Jepson, Stability of Phase Information, IEEE Trans. Patt. Anal. Mach. Intel. 15, 1253-1268, 1993 J. L. Barron, D.J. Fleet and S. S. Beauchemin, Performance of Optical Flow Techniques, Int. J. Comp. Vis. 12, 43-77, 1994 E. H. Adelson and J. R. Bergen, Spatiotemporal Energy Models for the Perception of Motion, J. Opt. Soc. Am. A 2, 284-299, 1985. 15) und es wird hier nicht mehr ausführlich darauf eingegangen.

Die von den Disparitäts-Elementen ESTᵢ (1 ≤ i ≤ n) ausgegebenen Disparitätswerte werden nachfolgend dem Kohärenzdetektor KD zugeführt, der aus den zugeführten Werten den eigentlichen Disparitätswert bestimmt. Insbesondere im Fall mehrerer Disparitätsdetektoren DD werden alle Ausgänge der jeweiligen Disparitätsdetektoren einem nachfolgenden Kohärenzdetektor KD zugeführt.

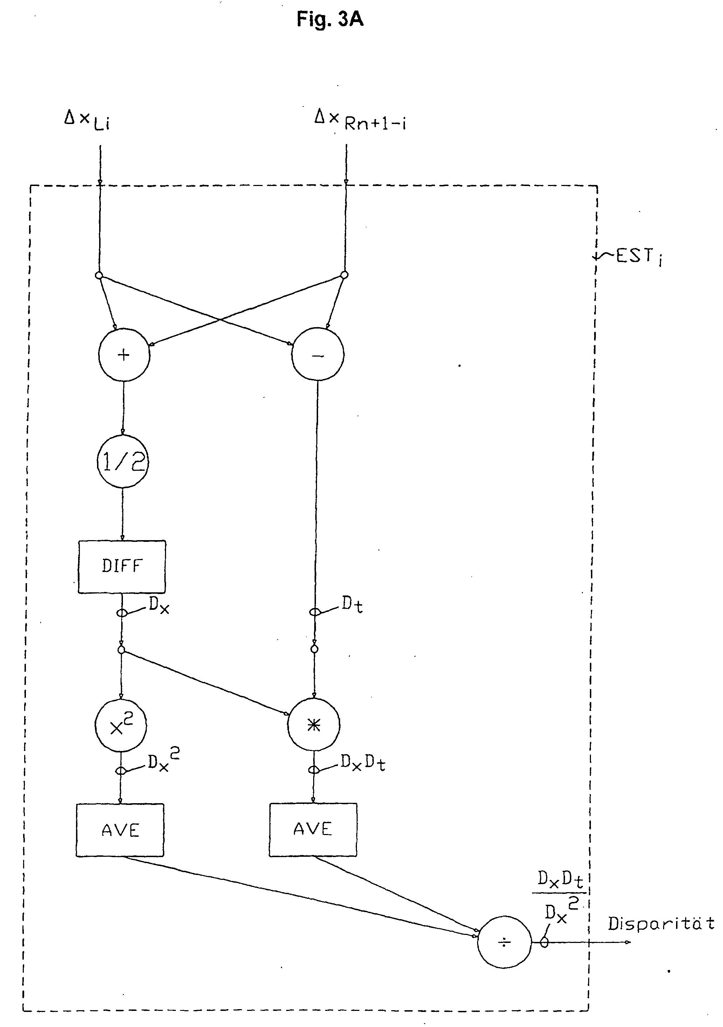

Fig. 3A zeigt nunmehr ausführlich ein Funktionsschaltbild eines Disparitäts-Elements ESTᵢ, bei dem die Auswertung auf dem gradientenbasierten Ansatz beruht.

Dabei werden dem jeweiligen Disparitäts-Element ESTᵢ jeweils Bilddaten ΔX_{Li}, ΔX_{Rn+1-i} (1 ≤ i ≤ n) zugeführt. Diese werden dann einer eine bildelementweise (pixelweise) Addition durchführenden Einheit (Bezugszeichen "+") zugeführt, dann einer mit dem Bezugszeichen "1/2" bezeichneten Multiplikationseinheit zugeführt, die eine Multiplikation der addierten Pixelwerte mit einem Faktor 1/2 durchführt, so daß hinsichtlich des jeweils zugeführten Bilddatenpaares eine Mittelwertbildung erfolgt. Darauffolgend durchlaufen die derart verarbeiteten Bilddaten ein Ableitungsfilter DIFF. Ein einfaches Ableitungsfilter DIFF kann beispielsweise Filterkoeffizienten haben, wie sie in der nachfolgenden Tabelle 1 angegeben sind.

**Tabelle 1:**

| Filterkoeffizienten Ableitungsfilter DIFF | | | |
|---|---|---|---|
| Pixelort | x-1 | x | x+1 |
| Filterwert | K1 = +0.5 | K2 = 0.0 | K3 = -0.5 |

Die von diesem Filter ausgegebenen Datenwerte werden einerseits in einer mit dem Bezugszeichen "x²" bezeichneten Einheit einer pixelweisen Quadrierung unterzogen, wobei die derart erhaltenen Werte dann einem Mittelungsfilter AVE zugeführt werden.

Andererseits werden die von dem Filter DIFF ausgegebenen Daten einer Multiplikationseinheit (Bezugszeichen "*") zugeführt, wo sie pixelweise mit der mittels einer Subtraktionseinheit (Bezugszeichen "-") bildelementweise erhaltenen Differenz der Daten ΔX_{Li}, ΔX_{Rn+1-i} multipliziert werden. Die derart erhaltenen Werte, die am Ausgang der Multiplikationseinheit zur Verfügung stehen, werden gleichfalls einem weiteren Mittelungsfilter AVE zugeführt.

Für beide Mittelungsfilter AVE können Filterkoeffizienten gewählt werden, wie sie z. B. in der folgenden Tabelle 2 wiedergegeben sind.

**Tabelle 2:**

| Filterkoeffizienten Mittelungsfilter AVE | | | | | |
|---|---|---|---|---|---|
| **Pixelort** | **x-2** | **x-1** | **x** | **x+1** | **x+2** |
| **Filterwert** | J1 = +0.0625 | J2 = +0.25 | J3 = +0.375 | J4 = +0.25 | J5 = +0.0625 |

Die an den Ausgängen beider Mittelungsfilter erhaltenen Datenwerte werden schließlich einer Divisionseinheit (Bezugszeichen "+") zugeführt, die an ihrem Ausgang den jeweils ermittelten Disparitätswert als Ausgangssignal des jeweiligen Disparitätselements ESTᵢ ausgibt.

Da für beide eingesetzten Filter lediglich Filterungen in x-Richtung erforderlich sind, was einer Filterung im seriellen Bilddatenverlauf entspricht, kann ein derartiges Disparitäts-Element vollständig in analoger Technik realisiert werden. Eine digitale Realisierung ist jedoch ebenfalls möglich.

Die derart ermittelten Disparitätswerte, die an den Ausgängen der Disparitätselemente ESTᵢ ausgegeben werden, werden dann dem Disparitäts-Kohärenzdetektor KD zugeführt.

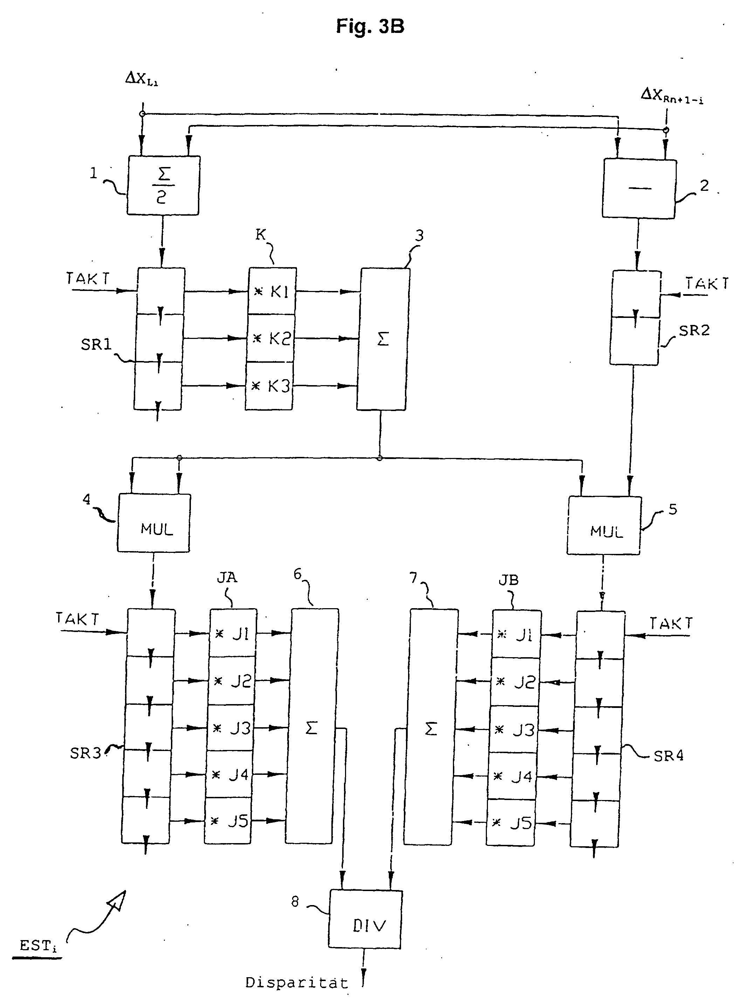

Fig. 3B zeigt ein Blockschaltbild zur Hardwarerealisierung eines vorstehend mit Bezug auf Fig. 3A funktional beschriebenen einzelnen Disparitätselements ESTᵢ. Ein Disparitätselement EST besteht dabei aus zur Synchronisation der gesamten Schaltung mit einem von dem Taktgenerator CLK abgeleiteten Taktsignal TAKT getakteten Schieberegistern SR1 bis SR4 zur Zwischenspeicherung einzelner Bildelemente, sowie arithmetischen Logikschaltungen (Mittelwertbildner 1: "Σ/2", Subtrahierer 2: "-", Multiplikationseinrichtungen 4, 5: MUL, Summierer 3, 6, 7: "Σ", Divisionseinrichtung 8: DIV). Dabei ist das in Fig. 3A mit DIFF bezeichnete Filter nunmehr durch das Schieberegister SR1, einen Koeffizientenmultiplikationsteil K (K1, K2, K3) und den Summierer 3 realisiert. Weiterhin sind die in Fig. 3A mit AVE bezeichneten Filter nunmehr durch das Schieberegister SR3, einen Koeffizientenmultiplikationsteil JA (Koeffizienten J1, J2, J3, J4, J5) und den Summierer 6, bzw. durch das Schieberegister SR4, einen Koeffizientenmultiplikationsteil JB (Koeffizienten J1, J2, J3, J4, J5) und den Summierer 7 realisiert. Die Disparität wird am Ausgang der Divisionseinrichtung 8 ausgegeben. Die im Blockschaltbild wiedergegebene Schaltungsanordnung verwirklicht dabei vollständig die in Verbindung mit dem Funktionsschaltbild gemäß Fig. 3A angegebene und beschriebene Arbeits- und Wirkungsweise eines Disparitätselements EST.

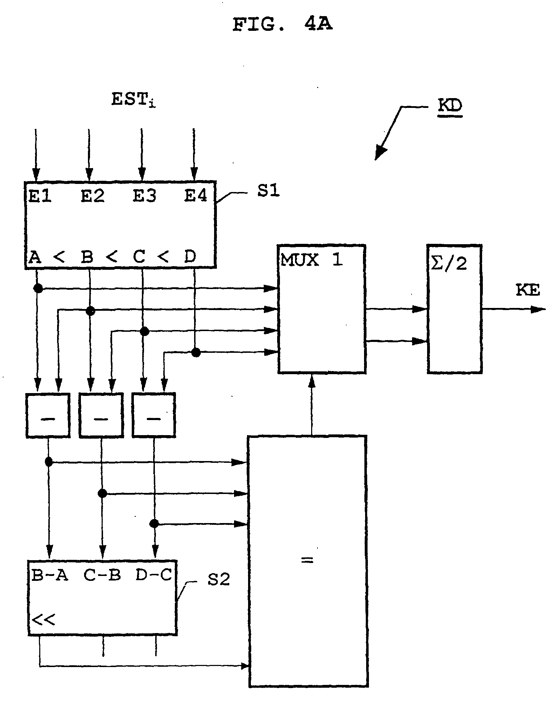

Fig. 4A zeigt ein Blockschaltbild für einen Kohärenzdetektor bzw. Disparitäts-Kohärenzdetektor KD gemäß einem ersten Ausführungsbeispiel, wobei als Beispiel ein Kohärenzdetektor KD mit nur vier Eingängen dargestellt ist. Für den in Fig. 2 dargestellten Fall müßte die Schaltung entsprechend auf sieben Eingänge bzw. allgemein auf n Eingänge erweitert werden. Falls mehrere (z) Verschiebeeinheiten mit jeweils zugeordneten Disparitätsdetektoren DD mit je n EST Elementen vorgesehen sind, wäre die Schaltung auf z*n Eingänge zu erweitern.

Die von den (vier nicht dargestellten) EST Elementen ESTᵢ zugeführten und an den Eingängen E1 bis E4 anliegenden Datenwerte der ermittelten Disparitäten werden einer Sortiereinrichtung S1 zugeführt, welche die Datenwerte entsprechend der Größe der Werte sortiert an den Ausgängen A bis D ausgibt. Im dargestellten Fall liegt am Ausgang A der kleinste Wert an, am Ausgang D der größte Wert. Derartige Sortiereinrichtungen können mit aus Vergleichern (Komparatoren) und Multiplexern bestehenden Logikgattern realisiert werden und sind hier nicht im einzelnen erläutert. Jeder der Ausgänge A bis D wird einem Multiplexer MUX1 zugeführt, während weiterhin je zwei der Ausgänge einem Subtrahierer ("-") zugeführt werden, um die Differenzen B-A, C-B und D-C der entsprechenden Werte zu ermitteln. Die Differenzen werden einer weiteren Sortiereinrichtung S2 zugeführt, die entsprechend der ersten Einrichtung S1 die Werte der Differenzen betragsmäßig sortiert am Ausgang ausgibt. Dabei ist im vorliegenden Fall nur das kleinste Ergebnis (am Ausgang "<<") weiter zu verarbeiten, welches das Wertepaar der Disparitäten darstellt, die einander am "benachbartsten" sind, also die geringste Abweichung voneinander aufweisen. Das Ergebnis der Sortiereinrichtung S2, also der Wert am Ausgang "<<" wird dann einer auf Gleichheit überprüfenden Einrichtung "=" zugeführt, die das ermittelte Ergebnis mit den dem Sortierer S2 zugeführten Differenzen vergleicht, um zu ermitteln, welcher der Eingangswerte das Ergebnis darstellt. Diese Variante stellt dabei die schaltungstechnisch einfachere Variante dar, denn dies wäre auch aus internen Entscheidungszuständen des Sortierers S2 ermittelbar. Das von der auf Gleichheit überprüfenden Einrichtung erhaltene Ergebnis dient wiederum zur Ansteuerung des Multiplexers MUX1, um die beiden zur Differenz gehörigen Ausgangssignale des Sortierers S1 einem Mittelwertbildner (Bezugszeichen "Σ/2") zuzuführen, der die beiden Werte zur Mittelwertbestimmung addiert und dann durch zwei dividiert. Dieser Mittelwert stellt dann das Ergebnis KE dar, also der Kohärenzwert der Vielzahl ermittelter Disparitätswerte.

Eine Variante der vorstehend beschriebenen Schaltung besteht darin, die ermittelten Differenzen mit einem Schwellenwert zu vergleichen, wobei nur die Kandidaten bzw. Werte weiterverarbeitet werden, die unterhalb des bestimmten Schwellenwerts, bzw. innerhalb eines durch Schwellenwerte bestimmten Fenster-Wertebereichs (z. B. entsprechend dem Fusionsbereich) liegen. Ein nachgeschaltetes Schaltwerk findet dann den größten Cluster benachbarter Kandidaten. Beide Varianten sind möglich und können bezogen auf den jeweiligen Anwendungsfall jeweils die besseren Ergebnisse liefern.

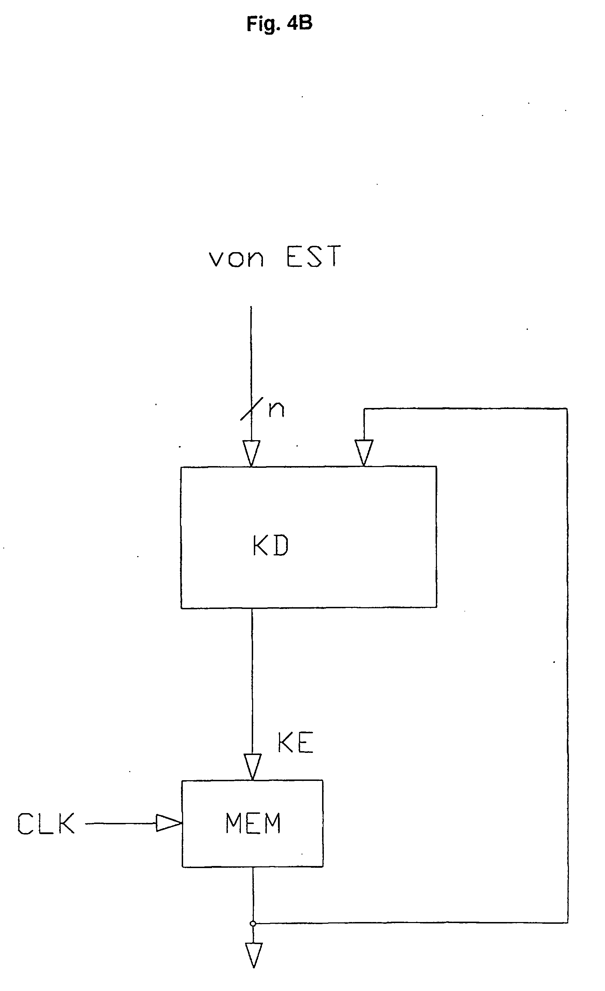

Fig. 4B zeigt eine Ausführungsvariante des zuvor beschriebenen Kohärenzdetektors KD, bei der dem Kohärenzdetektor neben Ausgangssignalen der EST Elemente weitere Daten zugeführt werden. Diese ist insbesondere dann einsetzbar, wenn die Bilddaten zeilenverschachtelt bzw. "interlaced" erhalten werden, und sich die gesamte Bildinformation eines Vollbildes z.B. aus zwei Halbbildern zusammensetzt. Dann werden die Disparitätswerte jeweils für Bilddaten eines Halbbildes ermittelt und der entsprechende Kohärenzwert der Disparitäten für Bildpunkte eines Halbbildes ermittelt. Für ein jeweiliges Halbbild werden die Werte KE für die Bildpunkte des Halbbildes in einer Speichereinrichtung MEM (mit einer Speicherkapazität für ein Halbbild) zwischengespeichert, und während der nächsten Halbbildperiode ausgeleseh und dem Kohärenzdetektor KD an einem zusätzlich vorzusehenden Eingangsanschluß zugeführt. Der interne Aufbau des Kohärenzdetektors KD ist im wesentlichen identisch zu dem in Verbindung mit Fig. 4A beschriebenen, mit dem Unterschied, daß er ein zusätzliches (das rückgekoppelte) Signal verarbeiten können muß, wofür verschiedene Varianten möglich sind. Insbesondere kann der rückgekoppelte Kohärenz-Disparitätswert bereits dem Sortierer S1 zugeführt werden und dort berücksichtigt werden, oder aber erst später bei der Mittelwertbildung Einfluß nehmen. In letzerem Fall wäre er dem Mittelwertbildner (Bezugszeichen "Σ/2") zuzuführen. Die in Fig. 4A dargestellte Schaltung ist dann jeweils entsprechend zu modifizieren.

Auf diese Weise kann dann der "wahre" Disparitätswert (Kohärenz-Disparitätswert) für ein Vollbild unter Berücksichtigung beider Halbbilder erhalten werden.

Fig. 5 veranschaulicht die Funktionsweise der vorstehend beschriebenen Disparitäts-Kohärenzdetektoren KD. In der graphischen Darstellung gemäß Fig. 5 sind jeweils auf der Abszisse die Bildelementpositionen bzw. Pixelnummern (bezogen auf das als Referenzbild gewählte erste oder zweite Bild) aufgetragen, und als Ordinate für jedes Bildelement die dem Kohärenzdetektor KD zugeführten n Disparitätswerte, die von den Disparitätselementen EST₁ bis ESTₙ ausgegeben werden. Im vorliegenden Fall sind beispielsweise n = 7 Disparitätselemente ESTᵢ für einen Disparitätsdetektor DD vorgesehen. Der Disparitätswert von Null ist dabei auf die Fixationsebene bezogen und entspricht der Entfernung der Fixationsebene. Die diesen umgebenden Werte der Disparität im Bereich von z.B. -4 bis +4 stellen dann den Fusionsbereich dar und entsprechen jeweils einer Entfernung, die näher oder entfernter als die Fixationsebene ist.

Für jedes Bildelement werden die vorliegenden n Disparitätswerte mittels des jeweils gewählten Kohärenzdetektors KD gemäß dem ersten oder zweiten Ausführungsbeispiel in Echtzeit verarbeitet bzw. verglichen, und derjenige Disparitätswert als der eigentliche Disparitätswert ausgegeben, der annähernd identisch mit möglichst vielen weiteren der zugeführten Disparitätswerte ist. Genauer heißt das, daß möglichst viele Disparitätswerte in einem Intervall von z. B. etwa 0.2 bis 0.4 um den betreffenden Disparitätswert herum liegen sollen, damit dieser betreffende Disparitätswert der eigentliche Disparitätswert ist. Am einfachsten ist es, wenn für ein bestimmtes Bildelement mehrere Disparitätswerte den gleichen Wert haben. Dieser Fall entspricht in der graphischen Darstellung gemäß Fig. 5 einem Schnittpunkt von zumindest zwei der n Disparitätswerte für ein bestimmtes Bildelement. Die zeilenweise Analyse der n Disparitätswerte für jedes Bildelement einer betreffenden Zeile liefert dann beispielsweise einen Verlauf der eigentlichen Disparität für eine betreffende Zeile des Bildes wie er im rechten Teil der Fig. 5 dargestellt ist, wobei aus der Gesamtheit der analysierten Bildzeilen dann eine Disparitätskarte in Form eines dritten Bildes ermittelt bzw. dargestellt werden kann (oberes Bild rechts in Fig. 5).

Durch die geeignete Auswahl der Anzahl n von Disparitäts-Elementen EST kann die Genauigkeit bzw. Zuverlässigkeit der seitens des Kohärenzdetektors ermittelten wahren Disparität gesteigert werden, da dann mehr Disparitätswerte vorliegen, die bezüglich ihrer Kohärenz ausgewertet werden. Insbesondere berechnet jedes Disparitäts-Element EST die Disparität im gesamten Meßbereich, also vollständig parallel. Mithin entfällt die bei vielen aus dem Stand der Technik bekannten Realisierungen notwendige iterative Annäherung von groben hin zu feinen Meßbereichen, um den tasächlichen Disparitätswert zu ermitteln.

Zudem kann beruhend auf den seitens der Diparitäts-Elemente EST des Disparitätsdetektors DD erhaltenen Werte noch eine Zusatzinformation hinsichtlich der Zuverlässigkeit der ermittelten Disparität gewonnen werden. Das heißt, betrachtet man die Disparitätswerte an einem Punkt der Zeile (vgl. Fig. 5), dann ist die Nähe der Nachbarn um den exakten Disparitätswert ein Maß für die Zuverlässigkeit der ermittelten Disparität. Über das gesamte Bild kann somit eine Zuverlässigkeitskarte ermittelt werden, die in Echtzeit eine Aussage bezüglich der Wahrscheinlichkeit für die Richtigkeit der ermittelten Disparität liefert.

Fig. 6 zeigt ein weiteres Beispiel für von Bildaufnehmern CCDL, CCDR aufgenommene Bilder "linkes Bild" (a) und "rechtes Bild" (b) von im Raum angeordneten Objekten. In beiden Bildern befinden sich ein erstes und zweites Objekt vor einem weiteren (dritten) Objekt, welches im Hintergrund der dargestellten räumlichen Szene zu erkennen ist. Aufgrund der Auswertung durch das erfindungsgemäße optische Sensorsystem zur Verarbeitung stereoskopischer Bilder in Echtzeit wird dann eine Disparitätskarte (c) gewonnen, die als Grauwertbild (oder als Farbbild) auf einem Bildschirm darstellbar ist. Gemäß Fig. 6 ist in der Disparitätskarte ein im Vordergrund befindliches Objekt hell dargestellt, ein im mittleren Tiefenbereich befindliches Objekt durch einen der Tiefe entsprechenden hellen bis dunklen Grauwert dargestellt, und das Objekt im Bildhintergrund als das Objekt mit der größten Tiefe ist in der Disparitätskarte annähernd schwarz wiedergegeben. Die im angegebenen Beispiel gemäß Fig. 6 beschriebene Darstellungsform für die Tiefeninformation ist jedoch nicht zwingend vorgeschrieben. Ebenso können Objekte im Vordergrund dunkel wiedergegeben sein, und Objekte im Hintergrund hell wiedergegeben sein.

Darüber hinaus können die Daten der angezeigten Disparitätskarte auch zu Steuerungszwecken eingesetzt werden, indem man diese Daten beispielsweise zur Steuerung von Robotern bei Montagevorgängen heranzieht und einen Soll-Ist-Vergleich mit vorab definierten 3-D-Fertigungsdaten und den aus den Disparitäten ermittelten Tiefeninformationen durchführt.

Unbemannte Fahrzeuge können bei Erreichen und/oder Unterschreiten eines vorbestimmten Minimal-Tiefenwertes zur Verhinderung von Kollisionen durch entsprechende Ansteuerungen zum Ausweichen veranlaßt werden, wobei dieses Prinzip auch bei der Implementierung passiver und/oder aktiver Abstandswarn- und Antikollisionssysteme in Kraftfahrzeugen einsetzbar ist. Weitere Einsatzmöglickeiten für das System zeigen sich in der Medizintechnik beispielsweise beim dreidimensionalen Abtasten von Körperkonturen zur Klassifikation von Dysplasien. Insbesondere bestehen Einsatzmöglichkeiten im kieferchirurgischen Bereich oder bei flexiblen oder starren Endoskopen.

## Patentansprüche

1. Kohärenzdetektor mit
einer Vielzahl von n Signaleingängen (**EST**_{**i**} (1 <= i <= n); **E1**, **E2**, **E3**, **E4**), an denen ein jeweiliger Eingangssignalwert anliegt,
einer ersten Sortiereinrichtung **(S1)** zum Sortieren der n zugeführten Eingangssignalwerte **(E1,..., E4**) entsprechend ihrem Wert (**A, B, C, D**) und zur parallelen Ausgabe der n sortierten Werte,
einer Vielzahl von n-1 Subtrahiereinrichtungen ("-") zur Subtraktion von jeweils zwei benachbarten sortierten Werten (**(D-C), (C-B), (B-A)**)**,**
einer zweiten Sortiereinrichtung (**S2**) zum Sortieren der erhaltenen n-1 Differenzen (**(D-C)**, **(C-B)**, **(B-A)**) hinsichtlich ihres Betrages und zur Ausgabe des kleinsten Differenzbetrags ("**<<**"),
einer Auswahleinrichtung ("=", **MUX1),** die anhand des ermittelten kleinsten Differenzbetrags ("**<<**") das diesem zugehörige Wertepaar der Eingangssignalwerte ausgibt, und
einer Ausgabeeinrichtung ("Σ/**2**"), der das ausgegebene Wertepaar zugeführt wird und die dessen Mittelwert **(KE)** ausgibt.

2. Detektor nach Anspruch 1, wobei
die Auswahleinrichtung **("=", MUX1)** eine
Vergleichseinheit ("**=**"), die durch Vergleichen des kleinsten Differenzbetrags mit den n-1 Differenzwerten denjenigen Differenzwert ermittelt, der dem kleinsten Differenzbetrag entspricht, und
eine Multiplexereinheit **(MUX1)** aufweist, die aufgrund der Ansteuerung durch das seitens der Vergleichseinheit bereitgestellte Vergleichsergebnis dasjenige Wertepaar der Eingangssignalwerte mit der geringsten Differenz ausgibt.

3. Bildverarbeitungsvorrichtung, mit
Verschiebe-Einrichtungen **(VSEL, VSER; ΔX**_{**L1**}**,** ..., **ΔX**_{**Ln**}**, ΔX**_{**R1**}**, ..., ΔX**_{**Rn**}**)** zur gegenseitigen Verschiebung von diesen jeweils zugeführten Bilddaten eines ersten Bildes und eines zu diesem unter einem anderen Aufnahmewinkel aufgenommenen zweiten Bildes, wobei die Bilddaten an den Verschiebe-Einrichtungen **(VSEL, VSER)** jeweils parallel abgegriffen werden und paarweise ( **(**Δ**X**_{**L1**}, Δ**X**_{**Rn**}**)**, **(ΔX**_{**L2**}_{,} Δ**X**_{**Rn-1**}**)**, ..., **(ΔX**_{**Ln-1**}, **ΔX**_{**R2**}**)**, **(ΔX**_{**Ln**}**, ΔX**_{**R1**}**)**) einer nachfolgenden
Disparitäts-Detektionseinrichtung (**DD**; **EST**_{**1**}, ..., **EST**_{**n**}) zugeführt werden; wobei die Disparitäts-Detektionseinrichtung (**DD**) für jedes der zugeführten Bilddatenpaare (**(ΔX**_{**Li**}**, ΔX**_{**Rn+1-i**}**)**) mittels eines jeweiligen Disparitäts-Elementes (**EST**_{**1**}, ..., **EST**_{**n**}) einen räumliche Tiefeninformationen für das jeweilige Bilddatenpaar darstellenden Disparitätswert ermittelt, und die ermittelten Disparitätswerte einer Kohärenz-Detektionseinrichtung (**KD**) nach einem der Ansprüche 1 oder 2 zuführt,
wobei der ausgegebene Disparitätswert (**KE**) auf jede Verschiebung der Bilddaten hin ermittelt wird und die zugehörige räumliche Tiefeninformation darstellt.

4. Bildverarbeitungsvorrichtung nach Anspruch 3, wobei
die Bilddaten eines Vollbildes während zweier aufeinanderfolgender Halbbildperioden zeilenverschachtelt in Halbbildern zugeführt werden,
von der Kohärenz-Detektionseinrichtung (**KD**) während einer ersten Halbbildperiode ermittelte tatsächliche Disparitätswerte in einer Speichereinrichtung (**MEM**) zwischengespeichert werden, und
diese zwischengespeicherten Disparitätswerte der Kohärenz-Detektionseinrichtung (**KD**) während der darauffolgenden zweiten Halbbildperiode zusätzlich zu den von der Disparitäts-Detektionseinrichtung (**DD**) erfaßten Disparitätswerten zugeführt werden, um die tatsächlichen Disparitätswerte für das Vollbild zu ermitteln.

5. Bildverarbeitungsvorrichtung nach Anspruch 3, wobei die zugeführten Bilddaten des ersten Bildes und des zweiten Bildes jeweils einer Vorverarbeitungseinrichtung **(VVL, VVR)** zugeführt werden; und aufgrund der Vorverarbeitung erhaltene unterschiedliche Bilddatenarten der Bilddaten des ersten Bildes und des zweiten Bildes jeweils Verschiebeeinrichtungen (**VSEL, VSER**) und einer Disparitäts-Detektionseinrichtung (**DD**) zugeführt werden, die jeweils für eine jeweilige Bilddatenart vorgesehen sind.

6. Bildverarbeitungsvorrichtung nach einem der Ansprüche 3 bis 5, wobei die Bilddaten des ersten und zweiten Bildes seriell und zueinander synchronisiert zugeführt werden.

7. Bildverarbeitungsvorrichtung nach Anspruch 6, wobei die Verschiebe-Einrichtungen (**VSEL**, **VSER**; **ΔX**_{**L1**}**,** ..., **ΔX**_{**Ln**}**, ΔX**_{**R1**}**,..., ΔX**_{**Rn**}**)** die Bilddaten bildpunktweise gegeneinander verschieben.

8. Bildverarbeitungsvorrichtung nach Anspruch 6, wobei die Verschiebe-Einrichtungen (**VSEL**, **VSER**; **ΔX**_{**L1**}**,** ... , **ΔX**_{**Ln**}**, ΔX**_{**R1**}**,..., ΔX**_{**Rn**}**)** die Bilddaten in Bruchteilen von Bildpunkten gegeneinander verschieben.

9. Bildverarbeitungsvorrichtung nach Anspruch 7 oder 8, wobei die Bilddaten als analoge Bildsignale zugeführt werden, die Verschiebeeinrichtungen als analoge Laufzeitketten ausgeführt sind und die gegenseitige Verschiebung der Bildelemente durch Einstellung der entsprechenden Laufzeit erfolgt.

10. Bildverarbeitungsvorrichtung nach Anspruch 7, wobei die Bilddaten als digitale Bildsignale zugeführt werden und die Verschiebeeinrichtungen als getaktete Schieberegister ausgeführt sind.

11. Bildverarbeitungsvorrichtung nach Anspruch 8, wobei die Bilddaten als digitale Bildsignale zugeführt werden und die Verschiebeeinrichtungen als Filter ausgeführt sind, die Bilddatenwerte zwischen benachbarten Bildelementen interpolieren.

12. Bildverarbeitungsvorrichtung nach Anspruch 3, wobei ein jeweiliges Disparitäts-Element (**EST**_{**1**}, ..., **EST**_{**i**}, ..., **EST**_{**n**}, **1** ≤ **i** ≤ **n**) den ermittelten Disparitätswert auf einer gradientenbasierten Verarbeitung beruhend ermittelt.

13. Bildverarbeitungsvorrichtung nach einem der Ansprüche 3 bis 12, wobei eine Anzeigevorrichtung vorgesehen ist, um die tatsächlichen Disparitätswerte (**KE**) als die Tiefeninformation darstellende Disparitätskarte auszugeben.

## Claims

1. Coherence detector with
a plurality of n signal inputs **(EST**_{**1**} (1 ≤ i ≤ n); **E1, E2, E3, E4),** at each of which an input signal value is supplied,
a first sorting unit **(S1)** for sorting the n supplied input signal values **(E1, ..., E4)** by their value **(A, B, C**, **D),** and for parallel output of the n sorted values,
a plurality of n-1 subtracters ("-") for subtracting each pair of consecutive sorted values **((D-C), (C-B), (B-A)),**
a second sorting unit **(S2)** for sorting the n-1 differences obtained **((D-C), (C-B), (B-A))** by their amount, and for output of the smallest such difference-amount ("<<"),
a selection unit ("**=**", **MUX1)** which, from the smallest difference-amount identified ("<<"), outputs the input signal value-pair corresponding to this difference-amount, and
an output device ("Σ/**2**") to which the output value-pair is fed and which outputs the average value (**KE**) thereof.

2. Detector according to Claim 1, wherein
the selection unit ("**=**", **MUX1)** has
a comparator unit ("**=**") which, by comparing the smallest difference-amount with the n-1 difference-values, identifies the difference-value corresponding to the smallest difference-amount, and
a multiplexer unit **(MUX1)** which, on the basis of the drive imparted by the comparison result provided by the comparator unit, outputs the input signal value-pair with the smallest difference.

3. Image-processing apparatus with
shift units **(VSEL, VSER; ΔX**_{**L1**}**, ..., ΔX**_{**Ln**}**, ΔX**_{**R1**}, ..., **ΔX**_{**Rn**}**)** for shifting in relation to each other image data, supplied to said units, of a first picture and of a second picture taken at a different angle from the first, the image data being in each case picked up in parallel at the shift units **(VSEL, VSER)** and supplied in pairs (**(**Δ**X**_{**L1**}, Δ**X**_{**Rn**}), (Δ**X**_{**L2**}, Δ**X**_{**Rn-1**}), ..., (Δ**X**_{**Ln-1**}, Δ**X**_{**R2**}), (Δ**X**_{**Ln**}, **ΔX**_{**R1**})) to an ensuing
disparity-detection unit (**DD**; **EST**_{**1**}, ..., **EST**_{**n**}); the disparity-detection unit (**DD**) determining for each of the pairs of image data supplied ((Δ**X**_{**L1**}, Δ**X**_{**Rn+1-i**})), a disparity value representing spatial depth information for the image data pair concerned, by means of an individual disparity element (**EST**_{**1**}**, ..., EST**_{**n**}), and feeding the disparity values obtained to a coherence detection unit (**KD**) according to Claim 1 or Claim 2,
the output disparity value (**KE**) being determined for each shift of the image data and representing the associated spatial depth information.

4. Image-processing apparatus according to Claim 3, wherein
the image data of a frame are supplied in interlaced fields during two successive field periods,
actual disparity values determined by the coherence detection unit (**KD**) during a first field period are temporarily stored in a memory (**MEM**)**,** and
these temporarily stored disparity values are fed to the coherence detection unit (**KD**) during the ensuing second field period in addition to the disparity values detected by the disparity detection unit (**DD**)**,** in order to determine the actual disparity values for the frame.

5. Image-processing apparatus according to Claim 3, wherein the supplied image data of the first picture and of the second picture are in each case supplied to a preprocessing unit (**VVL, VVR**); and different types of image data, obtained on the basis of the preprocessing, of the first picture and of the second picture are separately supplied to shift units (**VSEL, VSER**) and disparity detection unit (**DD**) that are each dedicated to a specific image data type.

6. Image-processing apparatus according to any one of Claims 3 to 5, wherein the image data of the first and second pictures are supplied serially and in synchronization with each other.

7. Image-processing apparatus according to Claim 6, wherein the image data are shifted pixel by pixel in relation to each other by the shift units (**VSEL, VSER;** Δ**X**_{**L1**}**, ..., ΔX**_{**Ln**}**, ΔX**_{**R1**}**,** ..., **ΔX**_{**Rn**})**.**

8. Image-processing apparatus according to Claim 6, wherein the image data are shifted in fractions of a pixel in relation to each other by the shift units (**VSEL, VSER; ΔX**_{**L1**}**, ..., ΔX**_{**Ln**}**, ΔX**_{**R1**}**, ..., ΔX**_{**Rn**}**).**

9. Image-processing apparatus according to Claim 7 or Claim 8, wherein the image data are supplied as analogue picture signals, the shift units are constructed as analogue delay lines and the picture elements are shifted in relation to each other by adjustment of the corresponding delay time.

10. Image-processing apparatus according to Claim 7, wherein the image data are supplied as digital picture signals and the shift units are constructed as clocked shift registers.

11. Image-processing apparatus according to Claim 8, wherein the image data are supplied as digital picture signals and the shift units are constructed as filters which interpolate image data values between adjacent picture elements.

12. Image-processing apparatus according to Claim 3, wherein each disparity element (**EST**_{**1**}, ..., **EST**_{**1**}, ..., **EST**_{**n**}, **1** ≤ **i** ≤ **n**), determines the disparity value by a gradient-based process.

13. Image-processing apparatus according to any one of Claims 3 to 12, wherein a display device is provided to output the actual disparity values (KE) as a disparity map presenting the depth information.

## Revendications

1. Détecteur de cohérence comportant
un grand nombre de n entrées de signaux (ESTᵢ) (1<=i<=n ; E1, E2, E3, E4) auxquelles s'applique une valeur de signal d'entrée respective,
un premier dispositif de tri (S1) pour le tri des n valeurs de signaux d'entrée (E1,...,E4) amenées suivant leur valeur (A,B,C,D) et pour la sortie parallèle des n valeurs triées,
un grand nombre de n-1 dispositifs de soustraction ("-") pour la soustraction de deux valeurs triées voisines ((D-C), (C-B), (B-A)),
un deuxième dispositif de tri (S2) pour le tri des n-1 différences obtenues ((D-C), (C-B), (B-A)) suivant leur valeur et pour la sortie de la plus petite différence ("<<"),
un dispositif de sélection ("=", MUX1) qui délivre, à l'aide de la plus petite différence ("<<") déterminée, la paire de valeurs correspondante des valeurs de signaux d'entrée, et
un dispositif de sortie ("Σ/2") auquel est envoyée la paire de valeurs sortie et qui délivre sa valeur moyenne (KE).

2. Détecteur selon la revendication 1, dans lequel
le dispositif de sélection ("=", MUX1) contient
une unité comparative ("=") qui, par comparaison de la plus petite différence avec les n-1 valeurs différentielles, détermine la valeur différentielle qui correspond à la plus petite différence, et
une unité de multiplexage (MUX1) qui, sur la base de la commande par le résultat de la comparaison, préparé par l'unité de comparaison, délivre la paire de valeurs des valeurs de signaux d'entrée avec la plus petite différence.

3. Dispositif de traitement d'image comportant
des dispositifs de déplacement (VSEL, VSER; ΔX_{L1},..., ΔX_{Ln}, ΔX_{R1}, ..., ΔX_{Rn}) pour le déplacement réciproque de ces données d'image, amenées dans chaque cas, d'une première image et d'une deuxième image, prise de celle-ci sous un autre angle de prise de vue, les données d'image étant prélevées parallèlement dans les dispositifs de déplacement (VSEL, VSER), et acheminées deux par deux ((ΔX_{L1}, ΔX_{Rn}), (ΔX_{L2}, ΔX_{Rn-1}), ..., (ΔX_{Ln-1}, ΔX_{R2}), (ΔX_{Ln}, ΔX_{R1})) à un
dispositif de détection de disparité (DD ; EST₁, ..., ESTₙ) suivant ; le dispositif de détection de disparité (DD) déterminant, pour chacune des paires de données d'image ((ΔX_{LI}, ΔX_{Rn+1-i})) amenées, au moyen d'un élément de disparité (EST₁, ..., ESTₙ) respectif, une valeur de disparité qui
représente des informations spatiales de profondeur pour la paire de données d'image respective, et envoyant les valeurs de disparité déterminées à un dispositif de détection de cohérence (KD) selon l'une des revendications 1 ou 2,
la valeur de disparité (KE) délivrée étant déterminée sur chaque déplacement des données d'image et représentant l'information spatiale de profondeur correspondante.

4. Dispositif de traitement d'image selon la revendication 3, dans lequel
les donnés d'image d'une image complète sont acheminées, pendant deux périodes de demi-image successives, avec leurs lignes imbriquées dans des demi-images,
les valeurs de disparité effectives, déterminées par le dispositif de détection de cohérence (KD) pendant une première période de demi-image sont stockées de manière temporaire dans un dispositif à mémoire (MEM), et
ces valeurs de disparité stockées de manière temporaire sont envoyées au dispositif de détection de cohérence (KD) pendant la deuxième période de demi-image suivante, en plus des valeurs de disparité détectées par le dispositif de détection de disparité (DD), afin de déterminer les valeurs de disparité effectives pour l'image complète.

5. Dispositif de traitement d'image selon la revendication 3, dans lequel les données d'image acheminées de la première image et de la deuxième image sont acheminées dans chaque cas vers un dispositif de pré-traitement (VVL, VVR) ; et les types différents de données d'image, obtenus sur la base du pré-traitement, des données d'image de la première image et de la deuxième image sont envoyés dans chaque cas à des dispositifs de déplacement (VSEL, VSER) et un dispositif de détection de disparité (DD), qui sont prévus dans chaque cas pour un type de données d'image respectif.

6. Dispositif de traitement d'image selon l'une des revendications 3 à 5, dans lequel les données d'image de la première et de la deuxième image sont acheminées en série et de manière synchronisée entre elles.

7. Dispositif de traitement d'image selon la revendication 6, dans lequel les dispositifs de déplacement (VSEL, VSER; ΔX_{L1}, ..., ΔX_{Ln}, ΔX_{R1}, ..., ΔX_{Rn}) déplacent les données d'image les unes par rapport aux autres, point par point.

8. Dispositif de traitement d'image selon la revendication 6, dans lequel les dispositifs de déplacement (VSEL, VSER; ΔX_{L1}, ..., ΔX_{Ln}, ΔX_{R1}, ..., ΔX_{Rn}) déplacent les données d'image les unes par rapport aux autres, en fractions de point d'image.

9. Dispositif de traitement d'image selon la revendication 7 ou 8, dans lequel les données d'image sont acheminées en tant que signaux d'image analogiques, les dispositifs de déplacement sont réalisés en tant que chaînes analogiques de durée et le déplacement réciproque des éléments d'image s'effectue par réglage de la durée correspondante.

10. Dispositif de traitement d'image selon la revendication 7, dans lequel les données d'image sont acheminées en tant que signaux d'image numériques et les dispositifs de déplacement sont réalisés en tant que registres à glissement rythmés.

11. Dispositif de traitement d'image selon la revendication 8, dans lequel les données d'image sont acheminées en tant que signaux d'image numériques et les dispositifs de déplacement sont réalisés en tant que filtres qui interpolent les valeurs de données d'image entre des éléments d'image voisins.

12. Dispositif de traitement d'image selon la revendication 3, dans lequel un élément de disparité (EST₁, ..., ESTᵢ, ..., ESTₙ, 1≤i≤n) détermine la valeur de disparité déterminée en se fondant sur un traitement basé sur un gradient.

13. Dispositif de traitement d'image selon l'une des revendications 3 à 12, dans lequel est prévu un dispositif d'affichage, afin de délivrer les valeurs de disparité effectives (KE) en tant que carte de disparité représentant l'information de profondeur.
